# EUROPÄISCHE PATENTSCHRIFT

(11) **EP 0 195 782 B1**
(45) Veröffentlichungstag und Bekanntmachung des Hinweises auf die Patenterteilung: **30.06.1993**
(21) Anmeldenummer: 85903993.5
(22) Anmeldetag: 05.08.1985
(51) Int. Cl.: H02P 6/02

(54) **VERFAHREN ZUM ANLAUFEN EINES ELEKTRONISCH KOMMUTIERTEN GLEICHSTROMMOTORS**
PROCESS FOR STARTING AN ELECTRONICALLY SWITCHED D.C. MOTOR
PROCEDE POUR LE DEMARRAGE D'UN MOTEUR A COURANT CONTINU COMMUTE ELECTRONIQUEMENT

(30) Priorität: 26.09.1984 DE 3435270
(43) Veröffentlichungstag der Anmeldung: 01.10.1986
(73) Patentinhaber: Deutsche Thomson-Brandt GmbH, 78003 Villingen-Schwenningen (DE)
(72) Erfinder: GLEIM, Günter, D-7730 VS-Marbach (DE); GYARMATI, Sandor, D-7730 VS-Pfaffenweiler (DE)
(86) Internationale Anmeldenummer: EP8500394
(87) Internationale Veröffentlichungsnummer: WO8602212

(56) Entgegenhaltungen:
- DE-A- 2 538 835
- DE-A- 3 209 394
- US-A- 4 297 622

## Beschreibung

Die Erfindung bezieht sich auf ein Verfahren zum Anlaufen eines elektronisch kommutierten Gleichstrommotors mit mehreren zyklisch angesteuerten Spulen mit Hilfe von pro Umdrehung von einem Abtaster zur Kommutierung abgegebenen Signalen.

Bei derartigen Motoren besteht immer die Schwierigkeit, die richtige Laufrichtung und Phasenlage der Drehung zu erkennen und auszuwerten. Es ist z.B. bekannt zur Erkennung der Laufrichtung und Phasenlage mehrere Abtaster zu verwenden. Durch die Abtaster verteuert sich die Anordnung (DE-A-2538835 und US-A-4297622). Es sind auch Anordnung mit nur einem Abtaster bekannt, die unterschiedlich codierte Abtastsignale auswerten, um die Laufrichtung und Phasenlage der Drehung zu erkennen. Diese Lösung arbeitet jedoch erst bei einer bestimmten Mindestdrehzahl des Motors, um die unterschiedliche Codierung richtig auswerten zu können. Dies bedeutet jedoch eine große zeitliche Verzögerung beim Anlaufen des Motors wenn Phasenlage und Drehrichtung mit der Ansteuerung nicht übereinstimmen.

Es ist auch bekannt, einen Motor der eingangs beschriebenen Art dadurch in die richtige Drehrichtung zu bekommen, daß er zunächst in eine vorbestimmte Stellung positioniert wird. Während dieser Positionierungszeit wird die Weiterschaltung der Kommutierung außer Wirkung gebracht. Erst nach dem zeitlichen Ablauf der Positionierung setzt die Kommutierung von dieser vorbestimmten Ausgangslage des Motors ein.

Insbesondere bei Motoren zum Antrieb der Kopftrommel von Videorecordern ist es wichtig, daß der Motor in kürzester Zeit in der richtigen Richtung anläuft, bevor der Einfädelvorgang des Magnetbandes erfolgt.

Der Erfindung liegt die Aufgabe zugrunde, ein Verfahren aufzuzeigen, durch das der schaltungstechnische Aufwand zum Steuern des Motors aus beliebiger Anlaufdrehrichtung heraus verringert wird. Diese Aufgabe wird durch die im Patentanspruch angegebenen Merkmale gelöst.

Die Erfindung wird im folgenden anhand der Zeichnung an einem Ausführungsbeispiel erläutert. Darin zeigen
- Fig. 1: schematisch den Aufbau eines Motors mit einem zweipoligen Magneten als Rotor,
- Fig. 2: Diagramme zur Erläuterung der Wirkungsweise der Anordnung nach Fig. 1,
- Fig. 3: den Bewegungsablauf in der Anlaufphase des Motors.

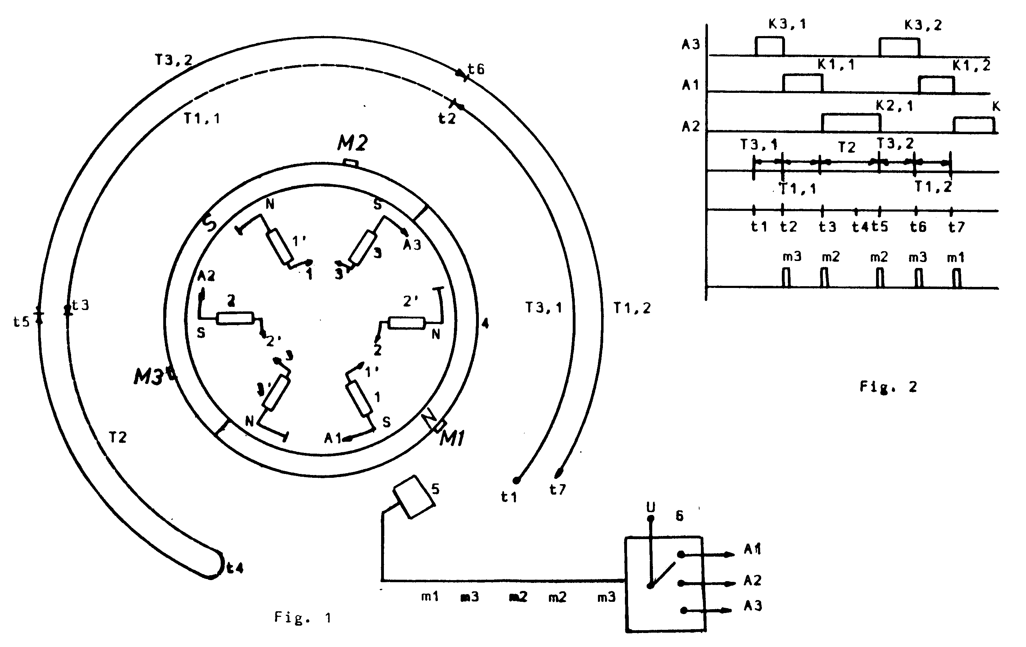

Fig. 1 zeigt, daß der Motor drei gleichmäßig verteilte Wicklungsstränge aufweist, wobei jeder der Wicklungsstränge aus je zwei, sich räumlich gegenüberliegenden gleichen Statorwicklungen 1, 1'; 2, 2'; 3, 3' besteht, die sowohl elektrisch als auch magnetisch in Serie geschaltete sind. Dabei ist dem magnetisierbaren Pol der Statorwicklungen 1, 2, 3, der dem Rotor des Motors gegenübersteht, ein magnetischer Südpol zugeordnet, während dem dem Rotor gegenüberstehenden Pol der Statorwicklungen 1', 2', 3' ein magnetischer Nordpol zugeordnet ist. Die Statorwicklungen 1', 2', 3' sind elektrisch mit Bezugspotential (Masse) einer Spannung U verbunden. Der Rotor besteht aus dem zweipoligen Magneten 4, an dessen Umfang sich gleichmäßig verteilte Markierungen M1, M2 und M3 befinden, die mit einem Abtaster 5 zusammenwirken. Die vom Abtaster 5 gewonnenen Impulse m1 - m3 (Fig. 2) werden auf eine Auswerteschaltung 6 gegeben, die bei jedem Eintreffen eines Impulses m1 - m3 eine Spannung U zyklisch an die Ausgänge A1 - A3 schaltet. Die Ausgänge A1 - A3 sind mit den Statorwicklungen 1, 2 und 3 des Motors verbunden. Durch die zyklische Ansteuerung entsteht ein Drehfeld für den Magneten 4.

Zur Erläuterung der Wirkungsweise des Verfahrens sei bei Einschalten des Motors eine Stellung des Magneten 4 in besonders ungünstiger Ausgangslage und Ansteuerung angenommen. Zum Zeitpunkt t1 wird der Motor in Betrieb genommen, und es sei angenommen, daß der Ausgang A3 die Statorwicklung 3 mit der Spannung U beaufschlagt. Der Magnet 4 wird deshalb zunächst während einer Zeitdauer T3, 1 im Gegenuhrzeigersinn anlaufen. Zum Zeitpunkt t2 gelangt die Markierung M3 an den Abtaster 5 und erzeugt einen Kommutierungsimpuls K1,1 (Fig. 2) durch zyklische Weiterschaltung der Auswertschaltung 6. Hierdurch bekommt der aus den Statorwicklungen 1, 1' bestehende Wicklungsstrang Strom, so daß der Motor zunächst abgebremst wird, was die gestrichelte Linie im Gegenuhrzeigersinn andeutet. Sobald der Magnet 4 mit seinem Nordpol über die Statorwicklung 1 gedreht hat, wird dieser bis zum Zeitpunkt t3 von dem aus den Statorwicklungen 1, 1' bestehenden Wicklungsstrang beschleunigt. Nach dem Zeitraum T1,1 gelangt die Markierung M2 an den Abtaster 5 und erzeugt einen Impuls m2, der den aus den Statorwicklungen 2, 2' bestehenden Wicklungsstrang einschaltet. Der Magnet 4 wird wiederum abgebremst, da der Stator mit seinen Wicklungen 2, 2' diesen anzieht, so daß der Magnet 4 im Uhrzeigersinn zum Zeitpunkt t4 seine Richtung unkehrt. Zum Zeitpunkt t5 gelangt die Markierung M2 wieder an den Abtaster 5 und erzeugt einen Impuls m2, der den nächstfolgenden aus den Statorwicklungen 3, 3' bestehenden Wicklungsstrang einschaltet. Dieser liegt dieses Mal in der nun eingenommenen Drehrichtung, so daß der Motor in der Nenndrehrichtung angetrieben wird. Nach einer Zeitspanne T3,2 wird zum Zeitpunkt t6 durch die Markierung M3 der aus den Statorwicklungen 1, 1' bestehende Wicklungsstrang beaufschlagt. Hiermit ist die Anlaufphase des Motors beendet, so daß dieser durch die bekannte Kommutierung mit Hilfe der Impulse K1 - K3 zyklisch weitergeschaltet wird.

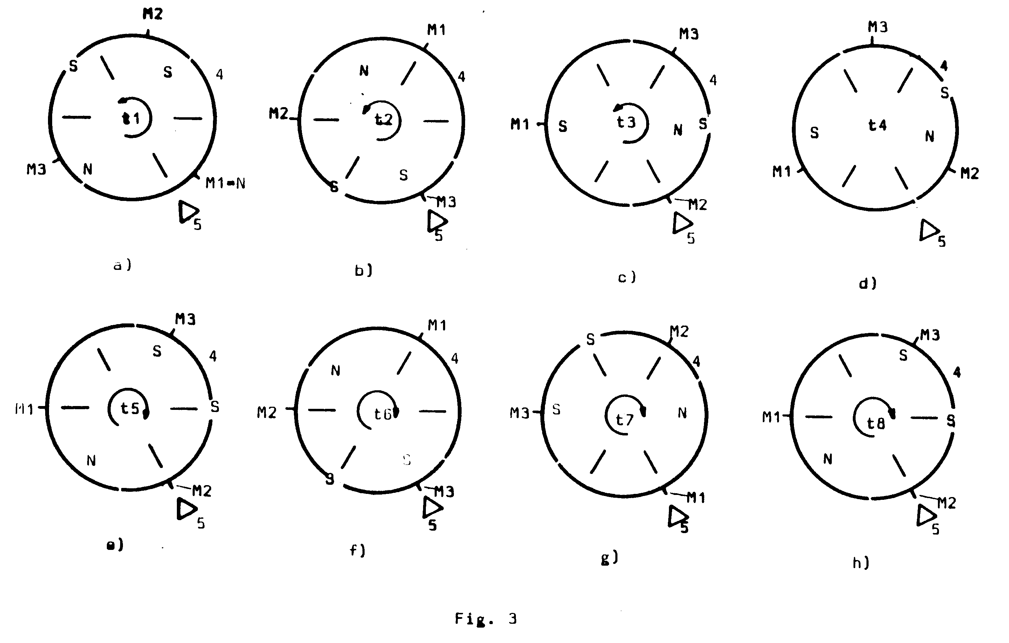

Der Bewegungsablauf der Anlaufphase des Motors sei mit Hilfe der Fig. 3 erläutert. Die einzelnen Phasen der Fig. 1 sind in den einzelnen Bewegungsschritten a bis h dargestellt. Der momentan aktivierte Wicklungsstrang ist mit N - S gekennzeichnet. Man erkennt, daß ab dem Zeitpunkt t4 die Drehrichtung geändert wird und daß vom Beginn des Anlaufens an die aus den Statorwicklungen 1, 1'; 2, 2'; 3, 3' bestehenden Wicklungsstränge in der richtigen Reihenfolge angesteuert werden.

Die Erfindung wurde am Beispiel eines Motors mit drei Wickelsträngen beschrieben. Es liegt aber im Rahmen der Erfindung, das Verfahren zum Anlaufen auch auf einen Motor mit mehr als drei Wicklungssträngen anzuwenden.

Die Markierungen M zur Kommutierung können auch codiert sein, damit sie von anderen Markierungen, die anderen Informationen dienen, unterschieden werden.

## Patentansprüche

1. Verfahren zum Anlaufen eines elektronisch kommutierten Gleichstrommotors mit einem Permanentmagnetrotor (4) und drei oder mehr zyklisch ansteuerbaren, im Stator zur Erzeugung eines Drehfeldes gleichmäßig verteilt angeordneten, gleichartigen Wicklungssträngen (1, 1'; 2, 2'; 3, 3') und mit am Rotorumfang ebenfalls gleichmäßig verteilt angeordneten Markierungen (M1; M2; M3) zur Erzeugung einer für die Anzahl der Wicklungsstränge erforderlichen Kommutierungsschrittfolge, die mit einem einzelnen drehfesten Abtaster (5) zur Gewinnung gleicher impulsförmiger Signale (m1; m2; m3) zwecks Steuerung der Kommutierung der Wicklungsstränge über eine Auswerteschaltung (6) zusammenwirken, wobei die Auswerteschaltung bei jedem Einschalten des Motors einen beliebigen Wicklungsstrang unter Strom setzt und anschließend bei Empfang der impulsförmigen Signale, unabhängig von der Anlaufdrehrichtung des Motors, die Kommutierung der Wicklungsstränge in der der durch die Auswerteschaltung vorgegebenen Nenndrehrichtung entsprechenden Reihenfolge weiterschaltet.

## Claims

1. Method for starting an electronically commutated direct-current motor with a permanent magnet rotor (4), three or more like winding sections (1, 1'; 2, 2'; 3, 3'), which can be cyclically activated and are uniformly distributed in the stator to produce a rotating field, and marks (M1; M2; M3) at the rotor circumference, which are also uniformly distributed, for producing a commutating step sequence necessary for the number of winding sections, which marks cooperate with a single non-rotatable sampler (5) for obtaining like pulse-type signals (m1; m2; m3) for the purpose of controlling the commutation of the winding sections via an evaluation circuit (6), the latter energising any desired winding section each time the motor is switched on and then, upon receiving the pulse-type signals, indexing the commutation of the winding sections in the sequence corresponding to the nominal direction of rotation predetermined by the evaluation circuit, irrespective of the starting direction of rotation of the motor.

## Revendications

1. Procédé pour le démarrage d'un moteur à courant continu commuté électroniquement avec un rotor à aimant permanent (4) et trois branches de bobines de même type (1, 1'; 2, 2'; 3, 3') ou davantage qui peuvent être excitées de manière cyclique, qui sont placées en étant réparties uniformément dans le stator pour produire un champ magnétique rotatif et avec des repères (M1 : M2 : M3), placés également de maniére uniforme à la périphérie du rotor, pour produire une séquence de pas de commutation nécessaire pour le nombre des branches de bobines qui coopèrent avec un seul organe de balayage (5) résistant à la rotation pour obtenir des signaux en forme d'impulsions égales (m1 : m2 : m3) pour la commande de la commutation des branches de bobines par l'intermédiaire d'un circuit d'exploitation (6), le circuit d'exploitation mettant sous tension, à chaque mise en circuit du moteur, une branche quelconque de bobines et retransmettant ensuite, lors de la réception des signaux en forme d'impulsions, indépendamment du sens de rotation du démarrage du moteur, la commutation des branches de bobines dans l'ordre correspondant au sens de rotation nominal prédéterminé par le circuit d'exploitation.
